# EUROPÄISCHE PATENTSCHRIFT

(11) **EP 2 127 945 B1**
(45) Veröffentlichungstag und Bekanntmachung des Hinweises auf die Patenterteilung: **28.11.2018**
(21) Anmeldenummer: 09161344.8
(22) Anmeldetag: 28.05.2009
(51) Int. Cl.: B60Q 1/08, G06K 9/00

(54) **Verfahren und Vorrichtung zum Steuern der Lichtabgabe eines Fahrzeugs**
Methods and device for controlling the light emission of a vehicle
Procédés et dispositif de commande de l'émission de lumière d'un véhicule

(30) Priorität: 28.05.2008 DE 102008025457
(43) Veröffentlichungstag der Anmeldung: 02.12.2009
(73) Patentinhaber: HELLA GmbH & Co. KGaA, 59552 Lippstadt (DE)
(72) Erfinder: Hoffmann, Ingo, 10437, Berlin (DE); Stefanovic, Marko, 13086, Berlin (DE); Montesi, Alessandro, 10119, Berlin (DE)
(74) Vertreter: Schaumburg und Partner Patentanwälte mbB

(56) Entgegenhaltungen:
- EP-A2- 1 433 655
- EP-A2- 1 914 115
- DE-B4- 19 758 664

## Beschreibung

Die Erfindung betrifft ein Verfahren und eine Vorrichtung zum Steuern der Lichtabgabe eines Fahrzeugs.

Aus den Dokumenten US 6,049,171 A; US 6,906,467 B2 und EP 1 520 749 A2 sind Systeme bekannt, bei denen die Frontscheinwerfer eines Kraftfahrzeugs abhängig von den mit Hilfe eines Bildverarbeitungssystems verarbeiteten Bilddaten einer Frontkamera des Fahrzeugs gesteuert werden. Ferner sind verschiedene Systeme zum Bestimmen des Abstandes zwischen einem Fahrzeug und einem Objekt bekannt. Ein solches System ist beispielsweise in dem Dokument DE 43 17 772 C2 beschrieben. Ferner sind Stereokamerasysteme für Fahrzeuge bekannt, mit deren Hilfe die Entfernung zwischen dem Fahrzeug und einem Objekt bestimmt werden kann. Ein solches Stereokamerasystem sowie Kalibrierungsverfahren zum Kalibrieren eines Stereokamerasystems sind beispielsweise in dem Dokument WO 2006/069978 A2 beschrieben. Weiterhin sind auch Entfernungsmessungen mit Hilfe von mit einer Monokamera aufgenommenen Bildern möglich. Ein solches System zur Entfernungsmessung ist beispielsweise aus der deutschen Patentanmeldung DE 10 2007 021 576 bekannt. Aus dem Dokument DE 10 2006 001 033 A1 sind ferner eine Vorrichtung und ein Verfahren zum Erkennen eines Objekts bekannt, mit denen eine Objektidentitätszuordnung von in einem Bild detektierten Objekten möglich ist.

Aus dem Dokument EP 1 442 927 A1 ist ein Verfahren zum Beleuchten einer Fahrbahn mit Hilfe eines Frontscheinwerfers eines Fahrzeugs bekannt, bei dem die Anwesenheit einer Person im Bereich vor dem Fahrzeug detektiert wird. Der Bereich, in dem sich die Person befindet, wird mit Hilfe einer Bildmaske derart ausgeleuchtet, dass ein Schatten um die Person projiziert wird.

Aus dem Dokument DE 102 01 523 A1 ist ein System zur Verdeckungsdetektion bei Bildsensorsystemen bekannt, bei dem die Bildunterschiede zwischen zwei mit Hilfe von wenigstens zwei Bildsensoren aufgenommenen Bildern derselben Szene detektiert und ein die Verdeckung anzeigendes Signal erzeugt wird.

Aus dem Dokument WO 03/017184 A2 sind Markierungen auch bei unscharfer Abbildung durch ein Bilderfassungssystem auf einem Bildsensor oder bei teilweiser Verdeckung dieser Objekte schnell und sicher identifizierbar. Ferner kann die Position dieser Objekte bestimmt werden.

Aus dem Dokument DE 103 23 915 A1 ist eine kamerabasierte Positionserkennung für ein Straßenfahrzeug bekannt, bei der das in Fahrtrichtung des Fahrzeugs liegende Umfeld mit Hilfe einer Kamera erfasst wird. Die von der Kamera erzeugten Bilddaten werden verarbeitet. Dabei kann mit Hilfe eines Mustererkennungsverfahrens auf die Lage des Fahrzeugs geschlossen werden.

Aus dem Dokument WO 00/43955 A1 ist ein System zum Wiederfinden von verdeckten Objekten in Bildern bekannt, bei dem eine Objektsequenz mit Bildwerten korreliert wird. Bei einer teilweisen Verdeckung des Objekts im Bild werden diejenigen Bildwerte, die im Bild innerhalb des Verdeckungsbereichs liegen, durch Grauwerte des Objekts ersetzt, bevor die Korrelation durchgeführt wird.

Um Beeinträchtigungen anderer Verkehrsteilnehmer zu vermieden, müssen Lichtquellen in einer Szene erkannt und als relevant oder nicht relevant klassifiziert werden. Die Lichtsteuerung der Frontscheinwerfer eines Fahrzeugs erfolgt dann unter Berücksichtigung der Position der relevanten Lichtquellen. Diese Funktionalität reicht jedoch in verschiedenen Verkehrssituationen nicht für eine fehlerfreie Lichtabgabe durch die Frontscheinwerfer des Fahrzeugs aus, um eine Behinderung anderer Fahrzeugführer sicher auszuschließen. Insbesondere wenn relevante Objekte, temporär von weiteren Objekten verdeckt werden, sind die relevanten Objekte nur in einigen der nacheinander als Bildfolge aufgenommenen Bildern vorhanden, sodass sowohl Probleme beim Detektieren und Klassifizieren dieser Objekte als auch bei der Auswahl einer geeigneten Ansteuerung der Frontscheinwerfer des Fahrzeugs auftreten. Solche relevanten Objekte sind insbesondere vorausfahrende und entgegenkommende Fahrzeuge anderer Verkehrsteilnehmer. Eine Behinderung dieser Verkehrsteilnehmer durch eine falsche Lichtansteuerung ist jedoch zu vermeiden, um sie nicht zu behindern und den Verkehr nicht zu gefährden.

Gattungsgemäß offenbart DE 197 58 664 B4 eine Vielzahl von Ansteuerungsmöglichkeiten von Scheinwerfern eines Kraftfahrzeugs. Ferner ist aus diesem Dokument bekannt, verschiedene Fahrmodi zu bestimmen, die mit Hilfe einer elektronischen Steuereinheit zur Modusbestimmung ermittelt werden.
Das Dokument EP 1 914 115 A2 offenbart eine Vorrichtung, mit deren Hilfe eine Vorhersage des Straßenverlaufs möglich ist.
Das Dokument EP 1 433 655 A2 offenbart eine Steuerung für ein Lichtsystem eines Kraftfahrzeugs, die einen Umgebungsdetektor nutzt, um die Lichtsteuerung abhängig von der Umgebung des Fahrzeugs durchzuführen.

Aufgabe der Erfindung ist es, ein Verfahren und eine Vorrichtung zum Steuern der Lichtabgabe eines Fahrzeugs anzugeben, bei denen eine Behinderung anderer Verkehrsteilnehmer vermieden wird.
Diese Aufgabe wird durch ein Verfahren zum Steuern der Lichtabgabe eines Fahrzeugs mit den Merkmalen des Patentanspruchs 1 bzw. 3 sowie durch eine Vorrichtung mit den Merkmalen des Patentanspruchs 10 gelöst. Vorteilhafte Weiterbildungen der Erfindung sind in den abhängigen Patentansprüchen angegeben.

Durch ein Verfahren und durch eine Vorrichtung zum Steuern der Lichtabgabe eines Fahrzeugs wird erreicht, dass nicht nur einzelne im Bild detektierte Objekte bei der Steuerung der Lichtabgabe eines Frontscheinwerfers des Fahrzeugs berücksichtigt werden sondern dass zusätzlich ein klassifizierter Verkehrssituationstyp bei der Auswahl und/oder Festlegung der Lichtabgabe des Frontscheinwerfers des Fahrzeugs mit berücksichtigt wird. Dadurch können Fehler, die bei der Klassifizierung einzelner Objekte auftreten können, erkannt und daraus resultierende Fehlansteuerungen der Frontscheinwerfer des Fahrzeugs vermieden werden. Somit wird eine Blendung anderer Verkehrsteilnehmer verhindert, wobei gleichzeitig eine dem klassifizierten Verkehrssituationstyp entsprechende größtmögliche Ausleuchtung des Bereichs vor dem Fahrzeug durch eine geeignete Lichtabgabe des Frontscheinwerfers erfolgt, sodass für die klassifizierte Verkehrssituation eine bestmögliche Ausleuchtung des Bereichs vor dem Fahrzeug vorzugsweise unter Berücksichtigung detektierter relevanter Objekte möglich ist.

Weiterhin ist es vorteilhaft, den Verkehrssituationstyp in regelmäßigen Abständen, vorzugsweise kontinuierlich, zu ermitteln.
Ferner können zum Klassifizieren der Verkehrs situation Parameter des Fahrzeugs, insbesondere die Eigengeschwindigkeit des Fahrzeugs, die dreidimensionale Bewegungsrichtung des Fahrzeugs, die dreidimensionale Position des Fahrzeugs, die Neigung des Fahrzeugs und/oder der Lenkwinkel des Fahrzeugs, als Eingangsgrößen zur Klassifizierung des Verkehrssituationstyps genutzt werden.
Der ermittelte Verkehrssituationstyp wird beispielsweise für einen Entscheidungsprozess zur Lichtsteuerung genutzt, dessen Ergebnis vorzugsweise den Steuermodulen der Frontscheinwerfer beispielsweise über ein Bussystem des Fahrzeugs zugeführt wird, die dann abhängig von dem Ergebnis des Entscheidungsprozesses die Aktoren zum Einstellen der Lichtverteilung der von den Frontscheinwerfern abgegebenen Lichtstrahlung und/oder die Lichtquellen der Frontscheinwerfer abhängig von den Einstellmöglichkeiten und Steuermöglichkeiten der konkreten im Fahrzeug vorhandenen Frontscheinwerfern ansteuert bzw. aktiviert und/oder deaktiviert.
Weitere Merkmale und Vorteile der Erfindung ergeben sich aus der folgenden Beschreibung, welche in Verbindung mit den beigefügten Figuren die Erfindung anhand eines Ausführungsbeispiels näher erläutert.
Es zeigen:
- Figur 1: eine schematische Darstellung einer ersten Verkehrssituation mit einem Fahrzeug und einer seitlich der Fahrbahn angeordneten Baumbepflanzung als Seitenansicht;
- Figur 2: eine schematische Darstellung einer zweiten Verkehrssituation als Draufsicht; und
- Figur 3: eine schematische Darstellung einer dritten Verkehrssituation als Draufsicht.

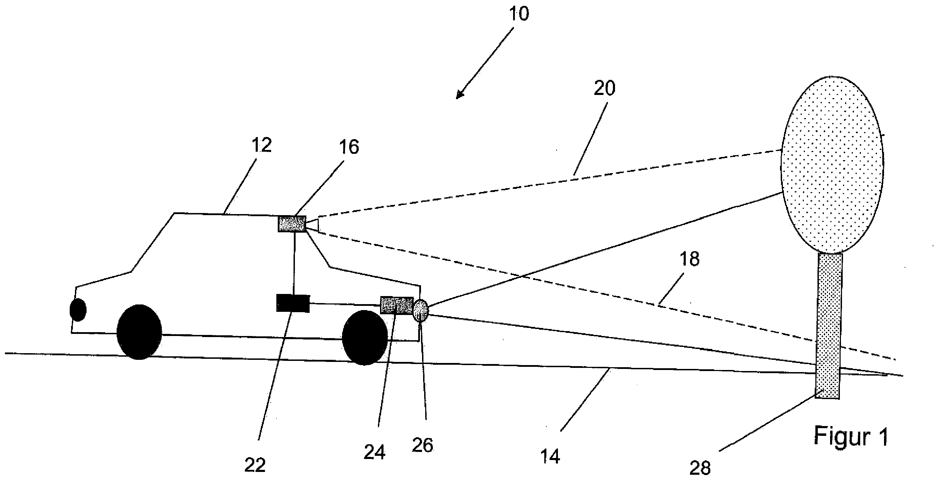

In Figur 1 ist eine Verkehrssituation gemäß einer ersten Ausführungsform der Erfindung dargestellt, bei der ein Fahrzeug 12 dargestellt ist, das entlang dem Fahrbahnverlauf einer Fahrbahn 14 fährt. Das Fahrzeug 12 hat eine Frontkamera 16, die eine Bildfolge mit Bildern eines Erfassungsbereichs vor dem Fahrzeug 12 erfasst. Der Erfassungsbereich ist in Figur 1 durch die Strichlinien 18, 20 begrenzt. Mit Hilfe der Frontkamera 16 werden somit Bilder mit Abbildungen von im Erfassungsbereich vorhandenen Objekten erfasst, die als Bilddaten von der Frontkamera 16 zu einer im Fahrzeug 12 angeordneten Verarbeitungseinheit 22 übertragen werden. Mit Hilfe der Frontkamera 16 werden die im Erfassungsbereich vor dem Fahrzeug 12 vorhandenen Objekte, wie das in Figur 1 dargestellte seitlich der Fahrbahn 14 angeordnete Verkehrsschild 28, erfasst. Die Bilddaten des Objekts 28 werden dann von der Verarbeitungseinheit 22 verarbeitet, wobei die Abbildung des Objekts 28 als Objekt detektiert und klassifiziert wird. In gleicher Weise werden als Objekte detektierte auf der Fahrbahn 14 vorausfahrende Fahrzeuge und auf einer Gegenfahrbahn der Fahrbahn 14 entgegenkommende Fahrzeuge als Objekte detektiert und mit Hilfe der Verarbeitungseinheit 22 klassifiziert. Abhängig von den detektierten Objekten und Parametern dieser Objekte 28 sowie Fahrzeugdaten des eigenen Fahrzeugs 12, wird die Verkehrs situation durch einen dazu in der Verarbeitungseinheit 22 implementierten Algorithmus klassifiziert, in der sich das Fahrzeug befindet, und ein durch den Algorithmus ermittelter Verkehrssituationstyp bei der Auswahl und/oder Festlegung der mit Hilfe des mindestens einen Frontscheinwerfers 26 erzeugten Lichtverteilung vor dem Fahrzeug 12 berücksichtigt. Informationen über die ausgewählte bzw. festgelegte Lichtverteilung wird von der Verarbeitungseinheit 22 zu einem Lichtsteuermodul 24 übertragen, dass eine den übermittelten Informationen entsprechende Lichtverteilung abhängig von den verfügbaren konkreten Einstellmöglichkeiten der Frontscheinwerfer 26 durch eine entsprechende Ansteuerung der Frontscheinwerfer 26 erzeugt.

Die Frontkamera 16 ist vorzugsweise eine Stereokamera, mit der die Entfernung eines Objekts zur Stereokamera und somit die Position von erfassten Objekten in einem Fahrzeugkoordinatensystem, wie das Verkehrsschild 28, bestimmt werden kann. Für die detektierten Objekte können jeweils Objektparameter ermittelt werden. Solche Objektparameter können eine für das jeweilige Objekt ermittelte Objektklasse, die dreidimensionale Position des Objekts, die dreidimensionale Bewegungsrichtung des Objekts, die Geschwindigkeit des Objekts und/oder die Dauer der Beobachtung des Objekts in einer mit Hilfe der Frontkamera 16 des Fahrzeugs 12 erfassten Bildfolge sein. Diese Objektparameter können als Eingangsgrößen zur Klassifizierung des Verkehrssituationstyps durch die Verarbeitungseinheit 22 verwendet werden. Ferner kann die Eigengeschwindigkeit des Fahrzeugs 12, die dreidimensionale Bewegungsrichtung des Fahrzeugs 12, die dreidimensionale Position des Fahrzeugs 12, die Geschwindigkeit des Fahrzeugs 12, die Neigung des Fahrzeugs 12 und/oder der Lenkwinkel des Fahrzeugs 12 als Eingangsgrößen zur Klassifizierung des Verkehrssituationstyps genutzt werden. Der durch die Verarbeitungseinheit 22 ermittelte Verkehrssituationstyp wird dann vorzugsweise als Eingangsgröße für einen Entscheidungsprozess zur Lichtsteuerung genutzt.

Der Verkehrssituationstyp kann in regelmäßigen Abständen, vorzugsweise kontinuierlich ermittelt werden. Dabei kann der Verkehrssituationstyp nach jedem mit Hilfe der Frontkamera 16 aufgenommenen Bild bzw. Bildpaar einer Stereokamera erneut ermittelt werden oder alternativ nach einer voreingestellten Anzahl aufgenommener oder verarbeiteter Bilder oder nach einem voreingestellten Zeitintervall regelmäßig erneut ermittelt werden. Dadurch ist eine fundiertere Festlegung der maximal möglichen Lichtverteilung bzw. der maximal möglichen Ausleuchtung des Bereichs vor dem Fahrzeug 12 mit Hilfe des Frontscheinwerfers 26 möglich. Die Lichtverteilung wird dadurch nicht nur in Abhängigkeit einzelner detektierter Objekte sondern unter Berücksichtigung einer Verkehrssituation bzw. eines Verkehrssituationstyps festgelegt. Beim Stand der Technik werden zur Festlegung der mit Hilfe der Frontscheinwerfer 26 bewirkten Lichtabstrahlung und Lichtverteilung als relevante Objekte nur Lichtquellen von Fahrzeugen berücksichtigt, d. h. nur Lichtquellen, die als Scheinwerfer oder Rücklichter anderer Fahrzeuge klassifiziert worden sind. Nicht relevante Lichtquellen und andere nicht relevante Objekte, wie Verkehrszeichen und Reflektoren von Leitpfosten werden bei der Festlegung der Lichtverteilung der Frontscheinwerfer 26 im Stand der Technik nicht berücksichtigt. Die Lichtverteilung wird dann im Stand der Technik abhängig von ermittelten relevanten Objekten gesteuert, die in mehreren nacheinander mit Hilfe der Frontkamera des Fahrzeugs aufgenommenen Bildern einer Bildfolge detektiert worden sind.

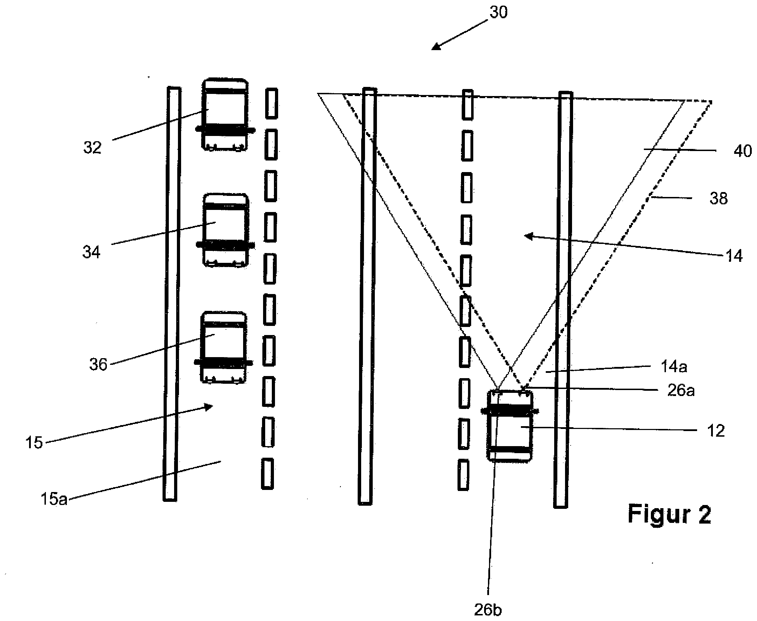

In Figur 2 ist eine schematische Darstellung einer zweiten Verkehrs situation 30 dargestellt, bei der sich insgesamt vier Fahrzeuge 12, 32, 34, 36 auf einer vierstreifigen Straße befinden. Elemente mit gleichem Aufbau und/oder gleicher Funktion sind mit denselben Bezugszeichen gekennzeichnet. Das Fahrzeug 12 befindet sich auf einer ersten Fahrspur 14a der Fahrbahn 14. Drei entgegenkommende Fahrzeuge 32 bis 36 befinden sich auf einer Fahrspur 15a der Gegenfahrbahn 15. Bei der in Figur 2 gezeigten Verkehrssituation 30 sind Abbildungen der als Objekte detektierten entgegenkommenden Fahrzeuge 32 bis 36 in den Bildern einer mit Hilfe der Frontkamera 16 des Fahrzeugs 12 aufgenommenen Bildfolge detektiert worden, sodass diese Objekte kontinuierlich erfasst und bei der von den Frontscheinwerfern 26a, 26b des Fahrzeugs 12 erzeugten Lichtverteilung berücksichtigt werden können. Aufgrund der entgegenkommenden Fahrzeuge 32 bis 36 werden die Frontscheinwerfer 26a, 26b durch Lichtsteuermodule 24a, 24b entsprechend der von der Verarbeitungseinheit 22 vorgegebenen Lichtverteilung so angesteuert, dass die entgegenkommenden Fahrzeuge 32 bis 36 nicht geblendet werden. Der Abstrahlbereich der vom Frontscheinwerfer 26a abgestrahlten Lichtstrahlung ist durch den mit Hilfe der Strichlinie 38 begrenzten Bereich und der Abstrahlbereich des vom Frontscheinwerfer 26b abgestrahlten Lichts ist durch den mit Hilfe der Volllinie 40 begrenzten Bereich schematisch gezeigt.

Aufgrund der entgegenkommenden Fahrzeuge 32 bis 36 hat die Verarbeitungseinheit 22 eine Abblendlichtlichtverteilung der Frontscheinwerfer 26a, 26b festgelegt, durch die die Fahrzeuge 32 bis 36 nicht geblendet werden können. Abhängig vom konstruktiven Aufbau der Frontscheinwerfer 26a, 26b können der Neigungswinkel und/oder der seitliche Abstrahlwinkel verändert werden. Ferner ist es bei modernen Frontscheinwerfern möglich, mit Hilfe von veränderbaren optischen Elementen der Frontscheinwerfer 26a, 26b, wie z. B. Blenden oder Blendenwalzen, möglich, die Verteilung der von den Frontscheinwerfern 26a, 26b abgestrahlten Lichtstrahlung zu verändern und einzustellen. Solche Blendenwalzen werden beispielsweise unter der Marke VarioX der Anmelderin vertrieben, bei denen aktuell bis zu fünf verschiedene Lichtverteilungen, insbesondere verschiedene Lichtverteilungen des Abblendlichtes, einstellbar sind. Insbesondere kann ein spezielles Autobahnlicht, Fernlicht sowie Umschaltung von Rechts- auf Linksverkehr mit Hilfe einer solchen Blendenwalze einfach realisiert werden. Ferner können durch entsprechende Ausbildung der durch die Blendenwalze bereitstellbaren Optiken andere an bestimmte Verkehrssituationen angepasste Lichtverteilungen realisiert werden. Systeme mit einer solchen Ansteuerung und Ausbildung von Frontscheinwerfern werden auch als variable intelligente Lichtsysteme bezeichnet. Insbesondere können auch Scheinwerfer mit Blendenwalzen auch Aktoren zur Steuerung eines dynamischen Kurvenlichts sowie zur Leuchtweitenregulierung umfassen, sodass eine Vielzahl unterschiedlicher Lichtverteilungen der von den Frontscheinwerfern 26a, 26b abgestrahlten Lichtstrahlung erzeugbar sind.

Bei der Verwendung von LED-Arrays als Lichtquellen für die Frontscheinwerfer 26a, 26b ergeben sich zusätzliche und alternative Ansteuermöglichkeiten, da einzelne LED-Elemente des LED-Arrays zu- und abgeschaltet werden können. Dadurch sind eine Vielzahl unterschiedlicher Lichtabstrahlungen durch die Frontscheinwerfer 26a, 26b des Fahrzeugs 12 möglich. Falls erforderlich, können auch Frontscheinwerfer mit LED-Arrays als Lichtquellen mit Aktoren zur Abstrahlwinkelveränderung, insbesondere zur Veränderung des Neigungswinkels und des seitlichen Abstrahlwinkels, kombiniert werden.

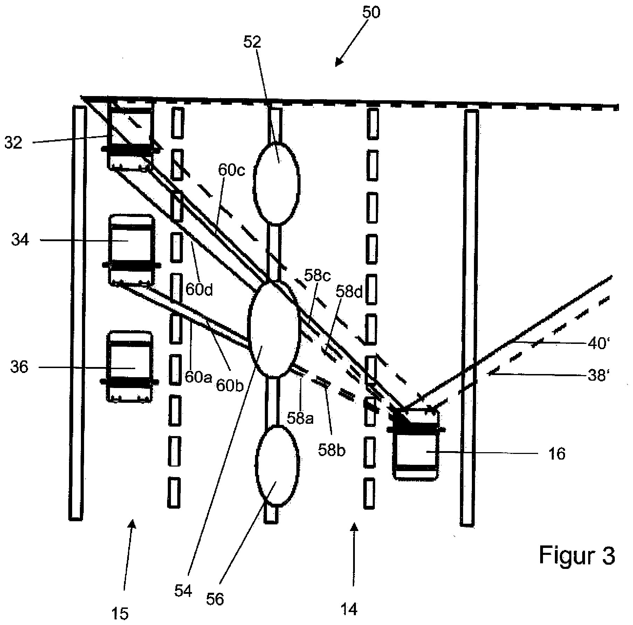

In Figur 3 ist eine Verkehrssituation 50 dargestellt, bei der zwischen den Fahrbahnen 14, 15 mehrere Büsche 52 bis 56 angeordnet sind, die in einzelnen mit Hilfe der Frontkamera 16 aufgenommenen Bildern einer Bildfolge die als relevante Objekte zu detektierenden Frontscheinwerfer der Fahrzeuge 32 bis 36 temporär verdecken, sodass diese relevanten Objekte nur in einigen Bildern der mit Hilfe der Frontkamera 16 erfassten Bildfolge detektiert werden können. Bei der in Figur 3 gezeigten Verkehrssituation 50 können die Frontscheinwerfer der Fahrzeuge 32, 34 nicht von der Verarbeitungseinheit 22 detektiert werden, da diese Frontscheinwerfer von dem Busch 54 aktuell verdeckt werden und nicht als Abbildungen in den durch die Frontkamera 16 erfassten Bildern vorhanden sind. Werden wie beim Stand der Technik üblich nur die tatsächlich detektierten Objekte 36 beim Ermitteln einer zulässigen Lichtabstrahlung durch die Frontscheinwerfer 26a, 26b des Fahrzeugs 12 berücksichtigt, kann das Fernlicht des Fahrzeugs 12 durch die Verarbeitungseinheit 22 in Verbindung mit den Lichtsteuermodulen 24a, 24b aktiviert werden. Dadurch können die Fahrzeugführer der Fahrzeuge 32, 34 nachfolgend geblendet werden, wenn die Lichtstrahlen durch die Lücken zwischen den Büschen 52 bis 56 zu den Fahrzeugen 32, 34 gelangen. In gleicher Weise kann eine veränderte Hell-Dunkel-Grenze, die über den Bereich der Hell-Dunkel-Grenze des Abblendlichts hinausgeht, zu einer Beeinträchtigung der Fahrzeugführer der entgegenkommenden Fahrzeuge 32 bis 36 führen, wenn dieses Licht in den Bereichen zwischen den Objekten 52 bis 56 bis zu den Fahrzeugsführern der Fahrzeuge 32 bis 36 dringt und diese behindert. Bei der in Figur 3 gezeigten Verkehrssituation 50 sind die Sehstrahlen 58a bis 58d der Frontkamera 16, die auf die Frontscheinwerfer der Fahrzeuge 32, 34 ausgerichtet sind, durch den Busch 54 unterbrochen. Weiterhin sind die von den Frontscheinwerfern der Fahrzeuge 32, 34 abgestrahlten Lichtstrahlen 60a bis 60d zur Frontkamera 16 hin durch den Busch 54 reflektiert und/oder absorbiert worden, sodass diese nicht bis zur Frontkamera 16 dringen und die Frontscheinwerfer der Fahrzeuge 32, 34 nicht als Objekte erfasst werden können. Die Frontscheinwerfer 26a, 26b des Fahrzeugs 12 sind dadurch auf Fernlicht geschaltet, da aktuell keine Objekte detektiert werden können, die durch das Fernlicht behindert werden würden. Jedoch werden die Fahrzeugführer der Fahrzeuge 32 bis 36 von dem durch die Lücken zwischen den Büschen 52 bis 56 durchdringenden Licht geblendet, wenn dieses Licht der Frontscheinwerfer 26 des Fahrzeugs 12 bei einer weiteren Fahrbewegung der Fahrzeuge 12, 32 bis 36, durch die Lücken hindurch auf eines der Fahrzeuge 32 bis 36 auftrifft.

In Figur 3 sind die Lichtabstrahlbereiche 38', 40' der Frontscheinwerfer 26a, 26b bei aktiviertem Fernlicht gezeigt. Bei der in Figur 3 gezeigten Verkehrssituation 50 geht von dem aktivierten Fernlicht eine Gefahr der Behinderung der Fahrzeugführer 32 bis 36 aus. Ferner würde aufgrund der temporären Erfassung der Fahrzeuge 32 bis 36 bei einer Sichtverbindung zwischen der Frontkamera 16 des Fahrzeugs 12 und den Frontscheinwerfern der Fahrzeuge 32 bis 36 durch die Lücken zwischen den Büschen 52 bis 56 hindurch das Fernlicht wiederholt deaktiviert, sodass ein ständiger Wechsel zwischen Fern- und Abblendlicht erfolgt, was zu einer wiederholt stark wechselnden Ausleuchtung des Bereichs vor dem Fahrzeug 12 führt.

Der Erfindung liegt die Erkenntnis zugrunde, zumindest problematische Verkehrssituationen durch Verkehrssituationstypen zu klassifizieren und die einzustellende Lichtverteilung der Frontscheinwerfer 26a, 26b abhängig von einem erkannten klassifizierten Verkehrssituationstyp und nicht oder nicht allein abhängig vom Vorhandensein einzelner relevanter Objekte festzulegen. Dabei werden vorzugsweise unterschiedliche Parameter der Objekte genutzt, um den Verkehrssituationstyp zu klassifizieren. Dies sind insbesondere die klassifizierten Objekttypen von erkannten Objekten, wie Frontscheinwerfer, Rückleuchten, Netzlampen usw., die geschätzte dreidimensionale Position der in den Bildern der Frontkamera 16 detektierten Objekte, der dreidimensionale Richtungsvektor der detektierten Objekte, die Geschwindigkeit der detektierten Objekte und/oder die Dauer der Beobachtung der detektierten Objekte in mehreren nacheinander mit Hilfe der Frontkamera 16 aufgenommenen Bildern. Dabei können die Objekte über mehrere mit Hilfe der Frontkamera aufgenommenen Bilder einer Bildfolge mit Hilfe eines bekannten Trackingverfahrens verfolgt werden. Ferner können zum Ermitteln des Verkehrssituationstyps Fahrzeugdaten des Fahrzeugs 12 genutzt werden, die der Verarbeitungseinheit 22, insbesondere über ein CAN-Bussystem des Fahrzeugs 12 von anderen nicht dargestellten Steuereinheiten des Fahrzeugs 12 bereitgestellt werden. Diese Fahrzeugdaten sind insbesondere die Geschwindigkeit des Fahrzeugs 12, der Lenkradwinkel des Fahrzeugs 12, der Geschwindigkeitsverlauf und/oder der Verlauf des Lenkwinkels des Fahrzeugs 12. In der nachfolgenden Tabelle sind die durch die Verarbeitungseinheit 22 ermittelten Objektparameter, der aufgrund dieser Objektparameter klassifizierte Verkehrssituationstyp sowie die Reaktion des Lichtsystems für verschiedene beispielhafte Verkehrssituationen aufgeführt. Es wird ausdrücklich darauf hingewiesen, dass sowohl die ermittelten Objektparameter, die zur Klassifizierung des jeweiligen Verkehrssituationstyps führen, als auch die aufgeführten Verkehrssituationstypen und die Reaktion des Lichtsystems nur auf ein konkretes Ausführungsbeispiel bezogen sind und die Verkehrssituationstypen, die zur Klassifizierung eines Verkehrssituationstyps führenden Parameter sowie die Reaktion des Lichtsystems bei anderen Ausführungsformen abweichen können.

| ermittelte Objektparameter von detektierten Objekten | klassifizierter Verkehrssituationstyp | Reaktion des Lichtsystems |
|---|---|---|
| ermittelte Objektposition: hinter dem eigenen Fahrzeug; Bewegungsrichtung Objekt: entgegen; ermittelte Objektklasse: Scheinwerfer | entgegenkommendes Objekt ist vorbeigefahren, keine weiteren relevanten Objekte erfasst | schnelle Aktivierung des Fernlichts |
| Objektposition: nah; ermittelte Objektklasse: Rückleuchten; Bewegungsrichtung Objekt: vorwärts | Objekt überholt eigenes Fahrzeug | Fernlicht aus, Deaktivierung vertikale Hell-Dunkel-Grenzen-Steuerung auf der Seite, auf der das Objekt eigenes Fahrzeug überholt |
| Eig engesch windigkei t: hoch; Rate detektierter sich entgegengesetzt und mit lateralen Versatz zur Bewegungsrichtung des eigenen Fahrzeugs bewegender Objekte: hoch | Autobahn | geringe Leuchtweitenerhöhung gegenüber Abblendlicht durch Aufheben der Hell-Dunkel-Grenze |
| Eigengeschwindigkeit mittel; Distanz zur Leitpfostenreihe links/rechts: nah; lateraler Versatz vorbeifahrender Fahrzeuge > 5m | Landstraße | keine Einschränkungen wenn keine anderen Fahrzeuge detektiert werden, vertikale Hell- Dunkel-Grenze für beide Frontscheinwerfer aktivierbar |
| Anzahl der als Netzlampen klassifizierten Objekte: hoch; Eig engesch windigkei t: niedrig | Stadt | Deaktivieren des Fernlichtas sistenten, kein Anheben der Hell-Dunkel-Grenze zugelassen; Deaktivierung der vertikalen Hell- Dunkel-Grenzen-Steuerung |
| Anzahl als Frontscheinwerfer detektierter Objekte, die pro Zeiteinheit verschwinden: hoch; Objektposition dieser Scheinwerfer: links/ rechts mittlere Distanz | Autobahnverkehr hinter Reihe von Hindernissen (z.B. Büsche) | keine Aktivierung der vertikalen Hell-Dunkel-Grenzen-Steuerung auf der Seite der entgegenkommenden Fahrzeuge |
| Seite auf der entgegenkommende als Scheinwerfer/Rückleuchten detektierte Objekte verschwinden: links | Rechtsverkehr | Anpassung der vertikalen Hell-Dunkel-Grenze |
| Seite auf der entgegenkommende als Scheinwerfer/Rückleuchten detektierte Objekte verschwinden: rechts | Linksverkehr | Anpassung der vertikalen Hell-Dunkel-Grenze |
| als Rücklichter detektierte Objekte verschwinden; Kurvendetektion über Sparerkennungsassistent; Straßenlaternenreihe; Lenkradwinkel ± geradeaus | vorausfahrendes Objekt verschwindet hinter einer Kurve | keine Fernlichtaktivierung, da Objekt bald wieder erscheinen wird |
| Klassifikatorunsicherheit | unsichere Situation | vorsichtige Reaktion der Scheinwerfer; Deaktivierung der vertikalen Hell-Dunkel-Grenzen- Steuerung |

## Patentansprüche

1. Verfahren zum Steuern der Lichtabgabe eines Fahrzeugs,
bei dem eine Klassifizierung des Verkehrssituationstyps der Verkehrssituation durchgeführt wird, in der sich das Fahrzeug (12) befindet,
bei dem in einem mit Hilfe einer Frontkamera (16) des Fahrzeugs (12) aufgenommenen Bild mehrere Objekte detektiert werden, wobei die Objekte, deren klassifizierte Objekttypen und/oder Objekteigenschaften der detektierten Objekte als Eingangsgrößen zur Klassifizierung des Verkehrssituationstyps genutzt werden,
bei dem mindestens ein Frontscheinwerfer (26a, 26b) des Fahrzeugs (12) abhängig von dem ermittelten Verkehrssituationstyps angesteuert wird, **dadurch gekennzeichnet,**
**dass** die Dauer der Beobachtung der Objekte in einer mit Hilfe der Frontkamera (16) des Fahrzeugs (12) erfassten Bildfolge und/oder dass die Anzahl der als Frontscheinwerfer detektierten Objekte, die pro Zeiteinheit verschwinden, als Eingangsgrößen zur Klassifizierung des Verkehrssituationstyps genutzt werden.

2. Verfahren nach Anspruch 1, **dadurch gekennzeichnet, dass** als Eingangsgröße zur Klassifizierung des Verkehrssituationstyps die Objektposition der als Frontscheinwerfer detektierten Objekte und/oder die Eigengeschwindigkeit des Fahrzeugs (12) und/oder die Rate detektierter sich entgegengesetzt und mit lateralem Versatz zur Bewegungsrichtung des eigenen Fahrzeugs (12) bewegender Objekte genutzt wird.

3. Verfahren zum Steuern der Lichtabgabe eines Fahrzeugs,
bei dem eine Klassifizierung des Verkehrssituationstyps der Verkehrssituation durchgeführt wird, in der sich das Fahrzeug (12) befindet,
bei dem in einem mit Hilfe einer Frontkamera (16) des Fahrzeugs (12) aufgenommenen Bild mehrere Objekte detektiert werden, wobei die Objekte, deren klassifizierte Objekttypen und/oder Objekteigenschaften der detektierten Objekte als Eingangsgrößen zur Klassifizierung des Verkehrssituationstyps genutzt werden, bei dem mindestens ein Frontscheinwerfer (26a, 26b) des Fahrzeugs (12) abhängig von dem ermittelten Verkehrssituationstyps angesteuert wird, **dadurch gekennzeichnet,**
**dass** die Rate detektierter sich entgegengesetzt und mit lateralem Versatz zur Bewegungsrichtung des eigenen Fahrzeugs (12) bewegender Objekte als Eingangsgröße zur Klassifizierung des Verkehrssituationstyps genutzt wird.

4. Verfahren nach einem der Ansprüche 1 bis 3, **dadurch gekennzeichnet,**
**dass** eine Aktivierung des Fernlichts erfolgt, wenn als Verkehrssituationstyp ermittelt wurde, dass ein entgegenkommendes Objekt vorbeigefahren ist und keine weiteren relevanten Objekte erfasst worden sind, und/oder dass keine Aktivierung einer vertikalen Hell-Dunkel-Grenzen-Steuerung des Frontscheinwerfers (26a, 26b) auf der Seite der entgegenkommenden Fahrzeuge erfolgt, wenn als Verkehrssituationstyp Autobahnverkehr hinter einer Reihe von Hindernissen klassifiziert worden ist.

5. Verfahren nach einem der Ansprüche 1 bis 4, **dadurch gekennzeichnet, dass** als Verkehrssituationstyp Autobahn oder Autobahnverkehr hinter einer Reihe von Hindernissen klassifiziert wird.

6. Verfahren nach Anspruch 5, wobei bei einer Klassifizierung des Verkehrssituationstyps Autobahn der Frontscheinwerfer (26a, 26b) derart angesteuert wird, dass eine geringe Leuchtweitenerhöhung gegenüber dem Abblendlicht durch Aufheben der Hell-Dunkel-Grenze erfolgt und wobei bei einer Klassifizierung des Verkehrssituationstyps Autobahnverkehr hinter einer Reihe von Hindernissen der Frontscheinwerfer (26a, 26b) derart angesteuert wird, dass keine Aktivierung der Hell-Dunkel-Grenzen-Steuerung auf der Seite der entgegenkommenden Fahrzeuge erfolgt.

7. Verfahren nach einem der vorhergehenden Ansprüche, **dadurch gekennzeichnet, dass** der Verkehrssituationstyp in regelmäßigen Abständen, vorzugsweise kontinuierlich, ermittelt wird.

8. Verfahren nach einem der vorhergehenden Ansprüche, **dadurch gekennzeichnet, dass** zum Klassifizieren der Verkehrssituation Parameter des Fahrzeugs (12), insbesondere die Eigengeschwindigkeit des Fahrzeugs (12), die dreidimensionale Bewegungsrichtung des Fahrzeugs (12), die dreidimensionale Position des Fahrzeugs (12), die Geschwindigkeit des Fahrzeugs (12), die Neigung des Fahrzeugs (12) und/oder der Lenkwinkel des Fahrzeugs (12) als Eingangsgrößen zur Klassifizierung des Verkehrssituationstyps genutzt werden.

9. Verfahren nach einem der vorhergehenden Ansprüche, **dadurch gekennzeichnet, dass** der ermittelte Verkehrssituationstyp als Eingangsgröße für einen Entscheidungsprozess zur Lichtsteuerung genutzt wird.

10. Anordnung zum Steuern der Lichtabgabe eines Fahrzeugs,
mit einer Bilderfassungseinheit (16), die Bilddaten mindestens einer Abbildung eines Bereichs vor dem Fahrzeug (12) bereitstellt; und
mit einer Verarbeitungseinheit (22), die die bereitgestellten Bilddaten verarbeitet,
wobei die Verarbeitungseinheit (22) eine Klassifizierung des Verkehrssituationstyps durchführt, in der sich das Fahrzeug (12) befindet;
wobei in einem mit Hilfe einer Frontkamera (16) des Fahrzeugs (12) aufgenommenen Bild mehrere Objekte detektiert werden,
wobei die Objekte, deren klassifizierte Objekttypen und/oder Objekteigenschaften der detektierten Objekte als Eingangsgrößen zur Klassifizierung des Verkehrssituationstyps genutzt werden, und
wobei die Verarbeitungseinheit (22, 24) mindestens einen Frontscheinwerfer des Fahrzeugs abhängig von dem ermittelten Verkehrssituationstyp ansteuert, **dadurch gekennzeichnet, dass** die Verarbeitungseinheit (22, 24) ein Verfahren nach einem der vorhergehenden Ansprüche ausführt.

## Claims

1. A method for controlling the light emission of a vehicle,
in which a classification of the traffic situation type of the traffic situation in which the vehicle (12) is situated is performed,
in which in an image captured with the aid of a front camera (16) of the vehicle (12) several objects are detected, wherein the objects, their classified object types and/or object properties of the detected objects are used as input values for classifying the traffic situation type,
in which at least one headlamp (26a, 26b) of the vehicle (12) is controlled dependent on the determined traffic situation type, **characterized in that**
the duration of the observation of the objects in an image sequence captured with the aid of the front camera (16) of the vehicle (12) and/or the number of objects that are detected as headlamps and disappear per time unit are used as input values for classifying the traffic situation type.

2. The method according to claim 1, **characterized in that** as an input value for classifying the traffic situation type the object position of the objects detected as headlamps and/or the intrinsic speed of the vehicle (12) and/or the rate of detected objects moving opposite and with lateral offset relative to the direction of movement of the own vehicle (12) is used.

3. The method for controlling the light emission of a vehicle,
in which a classification of the traffic situation type of the traffic situation in which the vehicle (12) is situated is performed,
in which in an image captured with the aid of a front camera (16) of the vehicle (12) several objects are detected, wherein the objects, their classified object types and/or object properties of the detected objects are used as input values for classifying the traffic situation type,
in which at least one headlamp (26a, 26b) of the vehicle (12) is controlled dependent on the determined traffic situation type, **characterized in that**
the rate of detected objects moving opposite and with lateral offset relative to the direction of movement of the own vehicle (12) is used as an input value for classifying the traffic situation type.

4. The method according to one of the claims 1 to 3, **characterized in that**
the high beam light is activated when it has been determined as a traffic situation type that an oncoming vehicle has passed and no further relevant objects have been detected and/or that a vertical bright-dark border control of the headlamp (26a, 26b) is not activated on the side of the oncoming vehicles when a controlled-access highway traffic behind a series of obstacles has been classified as a traffic situation type.

5. The method according to one of the claims 1 to 4, **characterized in that** a controlled-access highway or a controlled-access highway traffic behind a series of obstacles is classified as a traffic situation type.

6. The method according to claim 5, wherein, when controlled-access highway is classified as the traffic situation type, the headlamp (26a, 26b) is controlled such that a small increase of the headlight range as compared to the low beam light is effected by eliminating the bright-dark border and wherein, when controlled-access highway traffic behind a series of obstacles is classified as the traffic situation type, the headlamp (26a, 26b) is controlled such that no activation of the bright-dark border control on the side of the oncoming vehicles takes place.

7. The method according to one of the preceding claims, **characterized in that** the traffic situation type is determined at regular intervals, preferably continuously.

8. The method according to one of the preceding claims, **characterized in that** for classifying the traffic situation parameters of the vehicle (12), in particular the intrinsic speed of the vehicle (12), the three-dimensional direction of movement of the vehicle (12), the three-dimensional position of the vehicle (12), the speed of the vehicle (12), the inclination of the vehicle (12) and/or the steering angle of the vehicle (12) are used as input values for classifying the traffic situation type.

9. The method according to one of the preceding claims, **characterized in that** the determined traffic situation type is used as an input value for a decision making process for light control.

10. An arrangement for controlling the light emission of a vehicle
with an image capturing unit (16) which provides image data of at least one representation of an area in front of the vehicle (12); and
with a processing unit (22) which processes the provided image data;
wherein the processing unit (22) performs a classification of the traffic situation type in which the vehicle (12) is situated;
wherein in an image captured with the aid of a front camera (16) of the vehicle (12) several objects are detected,
wherein the objects, their classified object types and/or object properties of the detected objects are used as input values for classifying the traffic situation type, and
wherein the processing unit (22, 24) controls at least one headlamp of the vehicle dependent on the determined traffic situation type, **characterized in that** the processing unit (22, 24) implements a method according to one of the preceding claims.

## Revendications

1. Procédé de commande de l'émission de lumière d'un véhicule,
selon lequel une classification du type de situation de circulation de la situation de circulation dans laquelle le véhicule (12) se trouve est réalisée,
selon lequel plusieurs objets sont détectés dans une image acquise à l'aide d'une caméra avant (16) du véhicule (12), dans lequel les objets, leurs types d'objet et/ou propriétés d'objet classifiés des objets détectés sont utilisés comme grandeurs d'entrée pour classifier le type de situation de circulation,
selon lequel au moins un projecteur avant (26a, 26b) du véhicule (12) est commandé en fonction du type de situation de circulation déterminé, **caractérisé**
**en ce que** la durée de l'observation des objets dans une séquence d'images enregistrée à l'aide de la caméra avant (16) du véhicule (12) et/ou **en ce que** le nombre des objets détectés en tant que projecteur avant, qui disparaissent par unité de temps, sont utilisés comme grandeurs d'entrée pour classifier le type de situation de circulation.

2. Procédé selon la revendication 1,
**caractérisé en ce que** la position des objets détectés comme projecteur avant et/ou la vitesse propre du véhicule (12) et/ou le taux d'objets détectés se déplaçant dans le sens inverse et suivant un décalage latéral par rapport au sens de mouvement du véhicule (12) propre sont utilisés comme grandeur d'entrée pour la classification du type de situation de circulation.

3. Procédé de commande de l'émission de lumière d'un véhicule,
selon lequel une classification du type de situation de circulation de la situation de circulation dans laquelle le véhicule (12) se trouve est réalisée,
selon lequel plusieurs objets sont détectés dans une image acquise à l'aide d'une caméra avant (16) du véhicule (12), dans lequel les objets, leurs types d'objet classifiés et/ou propriétés d'objet des objets détectés sont utilisés comme grandeurs d'entrée pour la classification du type de situation de circulation,
selon lequel au moins un projecteur avant (26a, 26b) du véhicule (12) est commandé en fonction du type de situation de circulation déterminé, **caractérisé**
**en ce que** le taux d'objets détectés se déplaçant dans le sens inverse et suivant un décalage latéral par rapport au sens de mouvement du véhicule (12) propre est utilisé comme grandeur d'entrée pour la classification du type de situation de circulation.

4. Procédé selon l'une quelconque des revendications 1 à 3, **caractérisé**
**en ce qu'**une activation des feux de route s'effectue lorsqu'il a été déterminé comme type de situation de circulation qu'un objet venant en sens inverse est dépassé et qu'aucun autre objet pertinent n'a été détecté, et/ou **en ce qu'**aucune activation d'une commande de limite obscurité-clarté verticale du projecteur avant (26a, 26b) s'effectue du côté des véhicules venant en sens inverse, lorsqu'une circulation autoroutière derrière une série d'obstacles a été classifiée comme type de situation de circulation.

5. Procédé selon l'une quelconque des revendications 1 à 4, **caractérisé en ce qu'**une autoroute ou une circulation autoroutière derrière une série d'obstacles est classifiée comme type de situation de circulation.

6. Procédé selon la revendication 5, dans lequel, lorsque le type de situation de circulation est classifié autoroute, le projecteur avant (26a, 26b) est commandé de telle manière qu'une légère augmentation de la portée d'éclairage par rapport au feu de croisement s'effectue par suppression de la limite obscurité-clarté et dans lequel, lorsque le type de situation de circulation est classifié circulation autoroutière derrière une série d'obstacles, le projecteur avant (26a, 26b) est commandé de telle manière qu'aucune activation de la commande de limite clarté-obscurité du côté des véhicules venant en sens inverse ne s'effectue.

7. Procédé selon l'une quelconque des revendications précédentes, **caractérisé en ce que** le type de situation de circulation est déterminé par intervalles réguliers, de préférence en continu.

8. Procédé selon l'une quelconque des revendications précédentes, **caractérisé en ce que**, pour la classification de la situation de circulation, les paramètres du véhicule (12), en particulier la vitesse propre du véhicule (12), le sens de mouvement tridimensionnel du véhicule (12), la position tridimensionnelle du véhicule (12), la vitesse du véhicule (12), l'inclinaison du véhicule (12) et/ou l'angle de direction du véhicule (12) sont utilisés comme grandeurs d'entrée pour la classification du type de situation de circulation.

9. Procédé selon l'une quelconque des revendications précédentes, **caractérisé en ce que** le type de situation de circulation déterminé est utilisé comme grandeur d'entrée pour un processus de décision concernant la commande de lumière.

10. Ensemble de commande de l'émission de lumière d'un véhicule,
comprenant une unité d'acquisition d'image (16), qui fournit les données d'image d'au moins une reproduction d'une zone située devant le véhicule (12) ; et
comprenant une unité de traitement (22), qui traite les données d'image fournies,
dans lequel l'unité de traitement (22) réalise une classification du type de situation de circulation dans laquelle le véhicule (12) se trouve ;
dans lequel plusieurs objets sont détectés dans une image acquise à l'aide d'une caméra avant (16) du véhicule (12),
dans lequel les objets, leurs types d'objet classifiés et/ou propriétés d'objets des objets détectés sont utilisés comme grandeurs d'entrée pour la classification du type de situation de circulation, et
dans lequel l'unité de traitement (22, 24) commande au moins un projecteur avant du véhicule en fonction du type de situation de circulation déterminé, **caractérisé en ce que** l'unité de traitement (22, 24) met en oeuvre un procédé selon l'une quelconque des revendications précédentes.
